# EUROPEAN PATENT APPLICATION

(11) **EP 4 470 826 A1**
(43) Date of publication of application: **04.12.2024**
(21) Application number: 23814786.2
(22) Date of filing: 13.04.2023
(51) Int. Cl.: B60L 58/10, H02J 7/00, H02M 3/158

(54) **BATTERY CIRCUIT, CONTROL METHOD FOR BATTERY CIRCUIT, AND VEHICLE**

(30) Priority: 31.05.2022 CN 202210611795; 31.08.2022 CN 202211056937
(71) Applicant: BYD Company Limited, Shenzhen, Guangdong 518118 (CN)
(72) Inventor: DENG, Linwang, Shenzhen, Guangdong 518118 (CN); FENG, Tianyu, Shenzhen, Guangdong 518118 (CN); XIONG, Shi, Shenzhen, Guangdong 518118 (CN)
(74) Representative: Dehns Germany Partnerschaft mbB
(86) International application number: PCT/CN2023/087950
(87) International publication number: WO 2023/231592

(57) **Abstract**

A battery circuit, a control method for a battery circuit, and a vehicle. The battery circuit comprises: a power source end, a first battery pack, a second battery pack of a different type from the first battery pack, a voltage transformation unit, a first switch, a second switch and a ground end, wherein a positive electrode of the first battery pack is connected to the power source end, and a negative electrode of the first battery pack is connected to a positive electrode of the second battery pack; a negative electrode of the second battery pack is connected to the ground end; a first end of the first switch is connected to the power source end, and a second end of the first switch is connected to a first end of the second switch; a second end of the second switch is connected to the ground end; and the voltage transformation unit is connected between the negative electrode of the first battery pack and the second end of the first switch.

## Description

### CROSS-REFERENCE TO RELATED APPLICATIONS

The present disclosure claims priority to and benefits of Chinese Patent Application No. 202210611795.4 entitled "BATTERY CIRCUIT AND VEHICLE" and filed on May 31, 2022 and Chinese Patent Application No. 202211056937.1 entitled "POWER SUPPLY CIRCUIT, POWER SUPPLY CONTROL METHOD, STORAGE MEDIUM AND VEHICLE" and filed on August 31, 2022. The entire content of the above-referenced applications is incorporated herein by reference.

### FIELD

The present disclosure relates to the field of vehicle technologies, and more specifically, to a battery circuit, a control method for a battery circuit, and a vehicle.

### BACKGROUND

In the related art, double battery packs including a power type battery pack and an energy type are proposed.

However, how to provide a hardware basis for controlling the double battery packs including the power type battery pack and the energy type battery pack becomes a technical problem to be urgently resolved.

### SUMMARY

An objective of the present disclosure is to provide a new technical solution for a battery circuit.

According to a first aspect of the present disclosure, a battery circuit is provided. The battery circuit includes: a power source end, a first battery pack, a second battery pack of a different type from the first battery pack, a voltage transformation unit, a first switch, a second switch, and a ground end.

A positive electrode of the first battery pack is connected to the power source end, and a negative electrode of the first battery pack is connected to a positive electrode of the second battery pack.

A negative electrode of the second battery pack is connected to the ground end.

A first end of the first switch is connected to the power source end, and a second end of the first switch is connected to a first end of the second switch.

A second end of the second switch is connected to the ground end.

The voltage transformation unit is connected between the negative electrode of the first battery pack and the second end of the first switch.

According to an embodiment of the present disclosure, the battery circuit further includes:
a control unit, a first end of the control unit being connected to a control end of the first switch, and a second end of the control unit being connected to a control end of the second switch, where
the control unit is configured to: control, in a first preset condition, the first switch and the second switch to be opened or closed according to a first preset control rule, to increase output power of the second battery pack; and/or
control, in a second preset condition, the first switch and the second switch to be opened or closed according to a second preset control rule, to cause input power of the first battery pack to be different from input power of the second battery pack; and/or
control, in a third preset condition, the first switch and the second switch to be opened or closed according to a third preset control rule, to cause the first battery pack to charge the second battery pack or cause the second battery pack to charge the first battery pack; and/or
control, in a fourth preset condition, the first switch and the second switch to be opened, to cause the first battery pack and the second battery pack to be connected in series for discharging or charging.

According to an embodiment of the present disclosure, the first battery pack is a power type battery pack, and the second battery pack is an energy type battery pack; or
the first battery pack is an energy type battery pack, and the second battery pack is a power type battery pack.

According to an embodiment of the present disclosure, the first battery pack is the power type battery pack, the second battery pack is the energy type battery pack, and the battery circuit further includes: a filtering unit, where
a first end of the filtering unit is connected to the positive electrode of the first battery pack, a second end of the filtering unit is connected to the power source end, and a third end of the filtering unit is connected to the negative electrode of the first battery pack.

According to an embodiment of the present disclosure, the filtering unit includes a first inductor and a first capacitor, where
a first end of the first inductor is connected to the positive electrode of the first battery pack, and a second end of the first inductor is connected to the power source end; and
a first end of the first capacitor is connected to the first end of the first inductor, and a second end of the first capacitor is connected to the negative electrode of the first battery pack.

According to an embodiment of the present disclosure, the battery circuit further includes a first freewheeling unit and a second freewheeling unit, where
an input end of the first freewheeling unit is connected to the second end of the first switch, and an output end of the first freewheeling unit is connected to the first end of the first switch; and
an input end of the second freewheeling unit is connected to the second end of the second switch, and an output end of the second freewheeling unit is connected to the first end of the second switch.

According to an embodiment of the present disclosure, the first freewheeling unit is a first diode, and the second freewheeling unit is a second diode, where
an anode of the first diode is connected to the second end of the first switch, and a cathode of the first diode is connected to the first end of the first switch; and
an anode of the second diode is connected to the second end of the second switch, and a cathode of the second diode is connected to the first end of the second switch.

According to an embodiment of the present disclosure, the battery circuit further includes a voltage stabilizing unit, where
the voltage stabilizing unit is connected between the power source end and the ground end.

According to an embodiment of the present disclosure, the voltage stabilizing unit is a second capacitor.

According to an embodiment of the present disclosure, the voltage transformation unit is a second inductor.

According to an embodiment of the present disclosure, the voltage transformation unit is a second inductor, the first switch and the second switch form a first bridge arm, the battery circuit further includes a second bridge arm and a third inductor, and the first bridge arm and the second bridge arm form a full-bridge circuit, where
the second bridge arm is connected to the first bridge arm in parallel and is bridged between the positive electrode of the first battery pack and the negative electrode of the second battery pack;
one end of the third inductor is connected to a midpoint of the second bridge arm, and the other end of the third inductor is connected to the negative electrode of the first battery pack and the positive electrode of the second battery pack respectively; and
the control unit is connected to the second bridge arm, and the control unit is further configured to control the full-bridge circuit, to cause the first battery pack and/or the second battery pack to supply power.

According to an embodiment of the present disclosure, the control unit is further configured to:
control the full-bridge circuit to be in a non-working state, to cause the first battery pack and the second battery pack to be connected in series to supply power; or
control the full-bridge circuit to be in a working state, to cause the first battery pack and/or the second battery pack to supply power.

According to an embodiment of the present disclosure, the battery circuit further includes:
a current sampling unit, configured to obtain a current of the first battery pack and/or a current of the second battery pack, a current of the second inductor, and a current of the third inductor; and
the control unit controls the full-bridge circuit based on the obtained currents, to cause the first battery pack and/or the second battery pack to supply power.

According to an embodiment of the present disclosure, the control unit includes:
a first signal generation subunit, configured to generate a first control signal and a second control signal complementary to the first control signal according to a first current difference between a preset reference current and the current of the first battery pack or the current of the second battery pack;
a second signal generation subunit, configured to generate a third control signal and a fourth control signal complementary to the third control signal according to a second current difference between the current of the second inductor and the current of the third inductor; and
a control subunit, configured to control the full-bridge circuit based on the first control signal, the second control signal, the third control signal, and the fourth control signal.

According to an embodiment of the present disclosure, the first signal generation subunit includes: a first subtractor, a first regulator, a first signal generator, and a first inverter, where
the first subtractor is configured to obtain the first current difference between the preset reference current and the current of the first battery pack or the current of the second battery pack;
the first regulator is configured to perform proportional integral regulation on the first current difference to obtain a first given value;
the first signal generator is configured to generate the first control signal according to the first given value and a first preset signal; and
the first inverter is configured to invert the first control signal to obtain the second control signal; and
the second signal generation subunit includes: a second subtractor, a second regulator, a second signal generator, and a second inverter, where
the second subtractor is configured to obtain the second current difference between the current of the second inductor and the current of the third inductor;
the second regulator is configured to perform proportional integral regulation on the second current difference to obtain a second given value;
the second signal generator is configured to generate the third control signal according to the second given value and a second preset signal; and
the second inverter is configured to invert the third control signal to obtain the fourth control signal, where
the first preset signal and the second preset signal are out of phase by a half period.

According to an embodiment of the present disclosure, when the first battery pack is caused to discharge, the current sampling unit obtains the current of the second battery pack; and when the second battery pack is caused to discharge, the current sampling unit obtains the current of the first battery pack.

According to an embodiment of the present disclosure, the second end of the first switch and the first end of the second switch form a first connection point; and
the second bridge arm includes a third switch and a fourth switch, where a first end of the third switch is connected to the positive electrode of the first battery pack, a second end of the third switch is connected to a first end of the fourth switch to form a second connection point, a second end of the fourth switch is connected to the negative electrode of the second battery pack, and the second connection point is connected to one end of the third inductor.

According to an embodiment of the present disclosure, the battery circuit further includes a third freewheeling unit and a fourth freewheeling unit, where
an input end of the third freewheeling unit is connected to the second end of the third switch, and an output end of the third freewheeling unit is connected to the first end of the third switch; and
an input end of the fourth freewheeling unit is connected to the second end of the fourth switch, and an output end of the fourth freewheeling unit is connected to the first end of the fourth switch.

According to an embodiment of the present disclosure, the control subunit is further configured to:
control the first switch of the first bridge arm according to the first control signal, and control the second switch of the first bridge arm according to the second control signal; and control the third switch according to the third control signal, and control the fourth switch according to the fourth control signal.

According to an embodiment of the present disclosure, the control subunit is configured to: in a case that the first bridge arm malfunctions, control the third switch according to the first control signal, and control the fourth switch according to the second control signal.

According to a second aspect of the present disclosure, a control method for a battery circuit is provided, including:
obtaining a current of the first battery pack and/or a current of the second battery pack, a current of the second inductor, and a current of the third inductor; and
controlling the full-bridge circuit based on the obtained currents, to cause the first battery pack and/or the second battery pack to supply power.

According to an embodiment of the present disclosure, the controlling the full-bridge circuit based on the obtained currents, to cause the first battery pack and/or the second battery pack to supply power includes:
obtaining a first current difference between a preset reference current and the current of the first battery pack or the current of the second battery pack, and generating a first control signal and a second control signal complementary to the first control signal according to the first current difference;
obtaining a second current difference between the current of the second inductor and the current of the third inductor, and generating a third control signal and a fourth control signal complementary to the third control signal according to the second current difference; and
controlling the full-bridge circuit according to the first control signal, the second control signal, the third control signal, and the fourth control signal.

According to an embodiment of the present disclosure, the generating a first control signal and a second control signal complementary to the first control signal according to the first current difference includes:
performing proportional integral regulation on the first current difference to obtain a first given value, generating the first control signal according to the first given value and a first preset signal, and inverting the first control signal to obtain the second control signal; and
performing proportional integral regulation on the second current difference to obtain a second given value, generating the third control signal according to the second given value and a second preset signal, and inverting the third control signal to obtain the fourth control signal, where the first preset signal and the second preset signal are out of phase by a half period.

According to an embodiment of the present disclosure, the controlling the full-bridge circuit according to the first control signal, the second control signal, the third control signal, and the fourth control signal includes:
controlling the first switch of the first bridge arm according to the first control signal, and controlling the second switch of the first bridge arm according to the second control signal;
in a case that the first bridge arm works normally, controlling the third switch of the second bridge arm according to the third control signal, and controlling the fourth switch of the second bridge arm according to the fourth control signal; and in a case that the first bridge arm malfunctions, controlling the third switch of the second bridge arm according to the first control signal, and controlling the fourth switch of the second bridge arm according to the second control signal.

According to a third aspect of the present disclosure, a vehicle is further provided, including the battery circuit according to any one of the first aspect.

The battery circuit provided in an embodiment of the present disclosure may be implemented as providing a hardware basis for controlling double battery packs including the first battery pack and the second battery pack.

Other features and advantages of the present disclosure become more apparent from the detailed description of exemplary embodiments of the present disclosure made with reference to the accompanying drawings.

### BRIEF DESCRIPTION OF THE DRAWINGS

The accompanying drawings, which are incorporated in this specification and constitute a part of this specification, illustrate embodiments of the present disclosure, and are used to explain the principle of the present disclosure together with this specification.
FIG. 1 is a first schematic structural diagram of a battery circuit according to an embodiment of the present disclosure;
FIG. 2 is a second schematic structural diagram of a battery circuit according to an embodiment of the present disclosure;
FIG. 3 is a third schematic structural diagram of a battery circuit according to an embodiment of the present disclosure;
FIG. 4 is a fourth schematic structural diagram of a battery circuit according to an embodiment of the present disclosure;
FIG. 5 is a fifth schematic structural diagram of a battery circuit according to an embodiment of the present disclosure;
FIG. 6 is a sixth schematic structural diagram of a battery circuit according to an embodiment of the present disclosure;
FIG. 7 is a schematic structural diagram of a control unit according to an embodiment of the present disclosure;
FIG. 8 is a schematic diagram of a process in which a control unit generates a control signal according to an embodiment of the present disclosure;
FIG. 9 is a seventh schematic structural diagram of a battery circuit according to an embodiment of the present disclosure;
FIG. 10 is a schematic flowchart of a control method for a battery circuit according to an embodiment of the present disclosure; and
FIG. 11 is a schematic structural diagram of a vehicle according to an embodiment of the present disclosure.

### List of reference numerals:

100. Battery circuit; 101. Power source end; 102. First battery pack; 103. Second battery pack;
104. Voltage transformation unit; 1041. Second inductor; 105. First switch;
106. Second switch; 107. Ground end; 108. Control unit;
1081. First signal generation subunit; 1082. Second signal generation subunit; 1083. Control subunit;
109. Filtering unit; 1091. First inductor; 1092. First capacitor;
110. First freewheeling unit; 1101. First diode;
111. Second freewheeling unit; 1111. Second diode;
112. Voltage stabilizing unit; 1121. Second capacitor;
113. Third switch; 114. Fourth switch;
115. Third inductor; 116. Current sampling unit;
117. Third freewheeling unit; 118. Fourth freewheeling unit;
A1. First subtractor; B1. First regulator; P1. First signal generator;
N1. First inverter; A2. Second subtractor; B2. Second regulator;
P2. Second signal generator; and N2. Second inverter.

### DETAILED DESCRIPTION

Various exemplary embodiments of the present disclosure will now be described in detail with reference to the accompanying drawings. It should be noted that, unless otherwise specifically specified, relative arrangements of components and steps, numerical expressions, and values described in the embodiments do not limit the scope of the present disclosure.

The following description of at least one exemplary embodiment is merely illustrative in fact and in no way serves as any limitation on the present disclosure and application or use of the present disclosure.

Technologies, methods, and devices known to a person of ordinary skill in the related art may not be discussed in detail, but the technologies, the methods, and the devices should be considered as a part of this specification in a proper case.

In all the examples shown and discussed herein, any specific value should be construed as merely an example, rather than as a limitation. Therefore, other examples of the exemplary embodiments may have different values.

It should be noted that similar numbers and letters represent similar items in the following accompanying drawings. Therefore, once an item is defined in one of the accompanying drawings, the item does not need to be further discussed in the subsequent accompanying drawings.

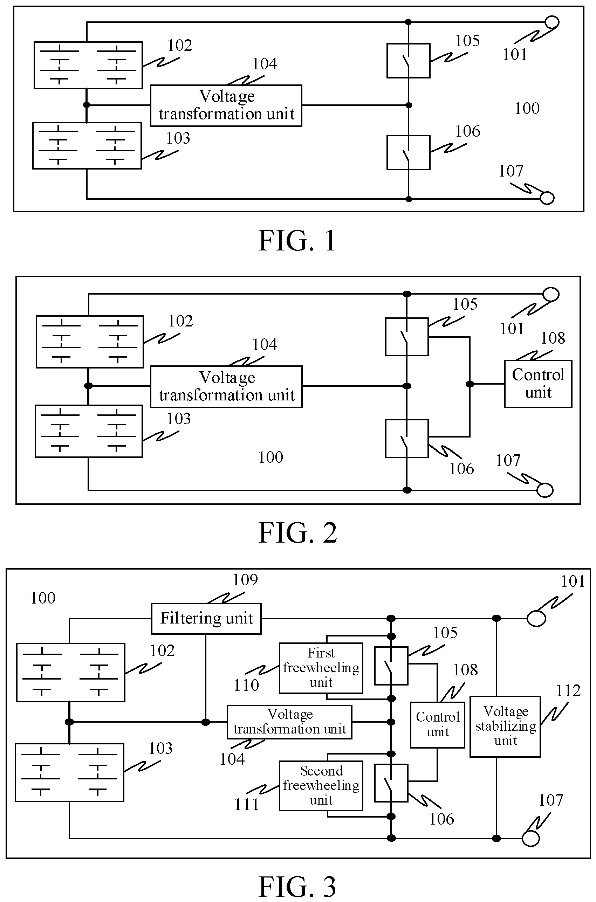

Embodiments of the present disclosure provide a battery circuit 100. As shown in FIG. 1, the battery circuit 100 includes: a power source end 101, a first battery pack 102, a second battery pack 103 of a different type from the first battery pack 102, a voltage transformation unit 104, a first switch 105, a second switch 106, and a ground end 107.

A positive electrode of the first battery pack 102 is connected to the power source end 101, and a negative electrode of the first battery pack 102 is connected to a positive electrode of the second battery pack 103.

A negative electrode of the second battery pack 103 is connected to the ground end 107.

A first end of the first switch 105 is connected to the power source end 101, and a second end of the first switch 105 is connected to a first end of the second switch 106.

A second end of the second switch 106 is connected to the ground end 107.

The voltage transformation unit 104 is connected between the negative electrode of the first battery pack 102 and the second end of the first switch 105.

In the embodiments of the present disclosure, a battery circuit is provided, including: a power source end, a first battery pack, a second battery pack of a different type from the first battery pack, a voltage transformation unit, a first switch, a second switch, and a ground end, where a positive electrode of the first battery pack is connected to the power source end, and a negative electrode of the first battery pack is connected to a positive electrode of the second battery pack; a negative electrode of the second battery pack is connected to the ground end; a first end of the first switch is connected to the power source end, and a second end of the first switch is connected to a first end of the second switch; a second end of the second switch is connected to the ground end; and the voltage transformation unit is connected between the negative electrode of the first battery pack and the second end of the first switch. In this way, the battery circuit provided in the embodiments of the present disclosure may be implemented as providing a hardware basis for controlling double battery packs including the first battery pack and the second battery pack.

In the embodiments of the present disclosure, in a case that the battery circuit 100 is in a discharging state, the power source end 101 in the battery circuit 100 is configured to connect to a power input end of a load, and the ground end 107 in the battery circuit 100 is configured to connect to a ground end of the load. The load may be, for example, a motor of an electric vehicle or a hybrid vehicle.

Alternatively, in a case that the battery circuit 100 is in a charging state, the power source end 101 in the battery circuit 100 is configured to connect to a power source output end of a charging device, and the ground end 107 in the battery circuit 100 is configured to connect to a ground end of the charging device. The charging device may be, for example, a charging pile, or a braking system of an electric vehicle or a hybrid vehicle.

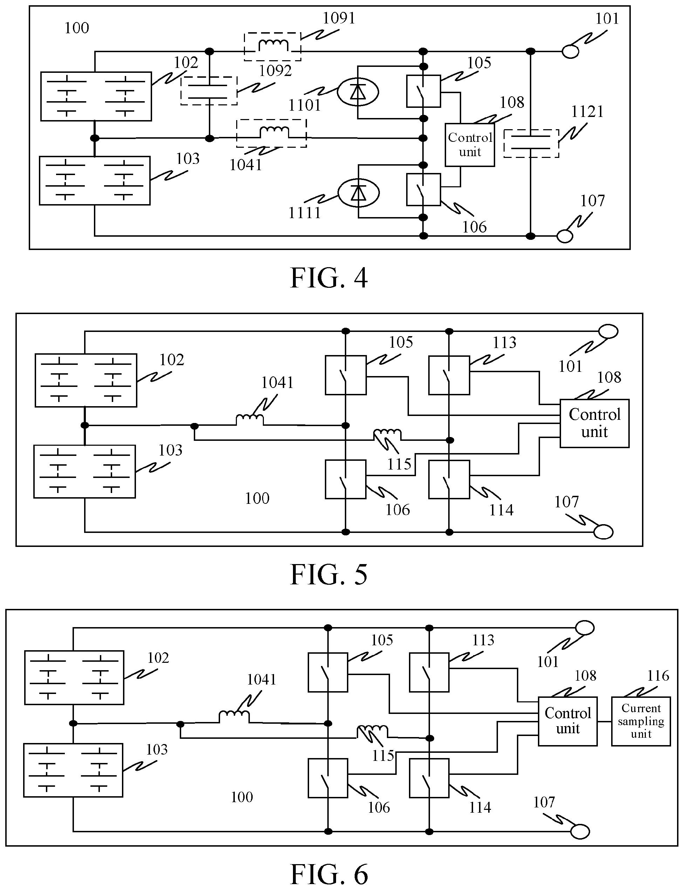

In an embodiment of the present disclosure, as shown in FIG. 4, the voltage transformation unit 104 may be a second inductor 1041. Certainly, the voltage transformation unit 104 may also be implemented in other manners.

In an embodiment of the present disclosure, an inductance value of the second inductor 1041 may be set in a range of 2 µH to 1500 µH.

In the embodiments of the present disclosure, in a case that the voltage transformation unit 104 is the second inductor 1041, the voltage transformation unit 104 has low costs and a simple structure.

In an embodiment of the present disclosure, the first switch 105 and the second switch 106 may each be a switch IC, a metal oxide semiconductor field effect transistor (MOSFET), an insulated gate bipolar transistor (IGBT), silicon carbide (SiC) switch, or the like.

It may be understood that, the first switch 105 further includes a control end, to implement control of closing and opening of the first switch 105. Similarly, the second switch 106 also further includes a control end, to control closing and opening of the second switch 106.

In the embodiments of the present disclosure, a type of the first battery pack 102 is different from a type of the second battery pack 103. Specifically, the first battery pack 102 is a power type battery pack, and the second battery pack 103 is an energy type battery pack. Alternatively, the first battery pack 102 is an energy type battery pack, and the second battery pack 103 is a power type battery pack.

In the embodiments of the present disclosure, the power type battery pack is specified as a battery pack with a high power density. The power density is specified as a maximum power of energy transfer by a battery per unit weight or volume during charging or discharging. In addition, in the embodiments of the present disclosure, a voltage value of the power type battery pack may be set in a range of 100 V to 1000 V

The energy type battery pack is a battery pack with a high energy density. The energy density is specified as energy stored by a battery per unit weight or volume. In addition, in the embodiments of the present disclosure, a voltage value of the energy type battery pack may be set in a range of 100 V to 1000 V

In the embodiments of the present disclosure, specific types of the first battery pack 102 and the second battery pack 103 are not limited, so that the compatibility of the battery circuit 100 provided in the embodiments of the present disclosure can be improved.

The battery circuit 100 shown in FIG. 1 provided in the embodiments of the present disclosure provides a hardware basis for controlling double battery packs including the power type battery pack and the energy type battery pack. Specifically, based on the battery circuit shown in FIG. 1, the double battery packs including the power type battery pack and the energy type battery pack may be controlled according to the following content.

To control the first switch 105 and the second switch 106, as shown in FIG. 2, the battery circuit 100 further includes a control unit 108.

A first end of the control unit 108 is connected to the control end of the first switch 105, and a second end of the control unit 108 is connected to the control end of the second switch 106.

In an embodiment of the present disclosure, the control unit 108 may be, for example, a CPU, an MCU, or the like.

In addition, the control unit 108 is configured to control, in a first preset condition, the first switch 105 and the second switch 106 to be opened or closed according to a first preset control rule, to increase output power of the second battery pack 103.

In this embodiment, the first preset condition may be that the battery circuit 100 is in a discharging state. The first preset control rule may be: performing a first on/off operation, where the first on/off operation is: controlling, within a first time period, the first switch 105 to be opened and the second switch 106 to be closed; and controlling, within a second time period, the first switch 105 to be closed and the second switch 106 to be opened; and performing the first on/off operation repeatedly until the first battery pack 102 is opened.

In this embodiment, the second time period is a time period adjacent to the first time period and located after the first time period. Duration corresponding to the first time period and duration corresponding to the second time period may be set according to experience or in another manner.

In this embodiment, when the battery circuit 100 is in the discharging state, the first switch 105 is controlled to be opened and the second switch 106 is controlled to be closed within the first time period. In this case, the second battery pack 103 charges the voltage transformation unit 104. The first switch 105 is controlled to be closed and the second switch 106 is controlled to be opened within the second time period. In this case, the voltage transformation unit 104 discharges stored electrical energy. That is, a voltage at an output end (an end connected to the first switch 105) of the voltage transformation unit 104 increases; and by repeating this process, the voltage at the output end of the voltage transformation unit 104 increases to be equal to a bus voltage. In this case, the first battery pack 102 is open-circuited. In this way, it can be implemented that only the second battery pack 103 discharges, and power outputted by the second battery pack 103 is higher than power that can be outputted by the second battery pack 103. That is, the output power of the second battery pack 103 is increased.

In addition, the control unit 108 is further configured to control, in a second preset condition, the first switch 105 and the second switch 106 to be opened or closed according to a second preset control rule, to cause input power of the first battery pack 102 to be different from input power of the second battery pack 103.

In this embodiment, the second preset condition may be that the battery circuit 100 is in a charging state. The second preset control rule may be: performing a second on/off operation, where the second on/off operation is: controlling, within a third time period, the first switch 105 to be closed and the second switch 106 to be opened; and controlling, within a fourth time period, the first switch 105 to be opened and the second switch 106 to be closed; and performing the second on/off operation repeatedly.

In this embodiment, the third time period is a time period adjacent to the fourth time period and located after the third time period. Duration corresponding to the third time period and duration corresponding to the fourth time period may be set according to experience or in another manner.

In this embodiment, when the battery circuit 100 is in the charging state, the first switch 105 is controlled to be closed and the second switch 106 is controlled to be opened within the third time period. In this case, the first battery pack 102 and/or the charging device charge the voltage transformation unit 104. The first switch 105 is controlled to be opened and the second switch 106 is controlled to be closed within the fourth time period. In this case, the voltage transformation unit 104 discharges stored electrical energy to jointly charge the second battery pack 103 with the charging device. That is, the voltage transformation unit 104 realizes a boosting function. Since the first battery pack 102 is only charged by the charging device, and the second battery pack 103 is jointly charged by the voltage transformation unit 104 and the same charging device, by repeating this process, the input power of the second battery pack 103 may be higher than the input power of the first battery pack 102. That is, the input power of the second battery pack 103 is different from the input power of the first battery pack 102.

It may be understood that, in a case that the second preset control rule is a control rule opposite to repeating the foregoing second on/off operation, that is, the first switch 105 is controlled to be opened and the second switch 106 is controlled to be closed within the third time period; and the first switch 105 is controlled to be closed and the second switch 106 is controlled to be opened within the fourth time period, by repeating this operation, the input power of the first battery pack 102 may be higher than the input power of the second battery pack 103. That is, the input power of the second battery pack 103 is different from the input power of the first battery pack 102.

In addition, the control unit 108 is further configured to control, in a third preset condition, the first switch 105 and the second switch 106 to be opened or closed according to a third preset control rule, to cause the first battery pack 102 to charge the second battery pack 103 or cause the second battery pack 103 to charge the first battery pack 102.

In this embodiment, the third preset condition may be that a charge current of the second battery pack 103 is less than a maximum charge current of the second battery pack 103. Correspondingly, the third preset control rule is: performing a third on/off operation, where the third on/off operation is: controlling, within a fifth time period, the first switch 105 to be closed and the second switch 106 to be opened; and controlling, within a sixth time period, the first switch 105 to be opened and the second switch 106 to be closed; and repeating the third on/off operation.

In this embodiment, the fifth time period is a time period adjacent to the sixth time period and located after the fifth time period. Duration corresponding to the fifth time period and duration corresponding to the sixth time period may be set according to experience or in another manner.

In this embodiment, in a case that the charge current of the second battery pack 103 is less than the maximum charge current of the second battery pack 103, the first switch 105 is controlled to be closed and the second switch 106 is controlled to be opened within the fifth time period. In this case, the first battery pack 102 charges the voltage transformation unit 104. The first switch 105 is controlled to be opened and the second switch 106 is controlled to be closed within the sixth time period. In this case, the voltage transformation unit 104 discharges stored electrical energy to the second battery pack 103. That is, the voltage transformation unit 104 realizes a boosting function. By repeating this process, the first battery pack 102 may charge the second battery pack 103.

It may be understood that, in a case that the third preset condition is that a charge current of the first battery pack 102 is less than a maximum charge current of the first battery pack 102, correspondingly, the third preset control rule is a control rule opposite to repeating the third on/off operation, that is, the first switch 105 is controlled to be opened and the second switch 106 is controlled to be closed within the fifth time period; and the first switch 105 is controlled to be closed and the second switch 106 is controlled to be opened within the sixth time period, by repeating this operation, the second battery pack 103 may charge the first battery pack 102.

In addition, the control unit 108 is further configured to control, in a fourth preset condition, the first switch 105 and the second switch 106 to be opened, to cause the first battery pack 102 and the second battery pack 103 to be connected in series for discharging or charging.

In this embodiment, the fourth preset condition is that the battery circuit 100 is in a discharging state or a charging state. In the fourth preset condition, the first switch 105 and the second switch 106 are controlled to be opened. In this way, the first battery pack 102 and the second battery pack 103 jointly discharge or charge.

Based on the foregoing content, the embodiments of the present disclosure provide various controls on the battery circuit shown in FIG. 1.

In the embodiments of the present disclosure, a battery circuit is provided, including: a power source end, a first battery pack, a second battery pack of a different type from the first battery pack, a voltage transformation unit, a first switch, a second switch, and a ground end, where a positive electrode of the first battery pack is connected to the power source end, and a negative electrode of the first battery pack is connected to a positive electrode of the second battery pack; a negative electrode of the second battery pack is connected to the ground end; a first end of the first switch is connected to the power source end, and a second end of the first switch is connected to a first end of the second switch; a second end of the second switch is connected to the ground end; and the voltage transformation unit is connected between the negative electrode of the first battery pack and the second end of the first switch. In this way, the battery circuit provided in the embodiments of the present disclosure may be implemented as providing a hardware basis for controlling double battery packs including the first battery pack and the second battery pack.

In an embodiment of the present disclosure, in a case that the first battery pack 102 is the power type battery pack, and the second battery pack 103 is the energy type battery pack, as shown in FIG. 3, the battery circuit 100 provided in the embodiments of the present disclosure further includes a filtering unit 109, where
a first end of the filtering unit 109 is connected to the positive electrode of the first battery pack 102, a second end of the filtering unit 109 is connected to the power source end 101, and a third end of the filtering unit 109 is connected to the negative electrode of the first battery pack 102.
In the embodiments of the present disclosure, the power type battery pack is generally used in a case that peak power (for example, peak discharging power generated in a traction process or peak charging power generated in a braking process) is generated during traveling of an electric vehicle or a hybrid vehicle, and does not need to be used in other cases. Therefore, in other cases, it is expected that a current value of an output current of the power type battery pack is 0. In this case, the filtering unit 109 may be configured to suppress a current ripple of the first battery pack 102, to prevent an output current of the power type battery pack used as the first battery pack 102 from fluctuating near 0. In this way, fast charging and discharging of the first battery pack 102 at a high frequency can be avoided, thereby reducing a problem of a shortened service life of the first battery pack 102.
In an embodiment of the present disclosure, as shown in FIG. 4, the filtering unit 109 includes a first inductor 1091 and a first capacitor 1092, where
a first end of the first inductor 1091 is connected to the positive electrode of the first battery pack 102, and a second end of the first inductor 1091 is connected to the power source end; and
a first end of the first capacitor 1092 is connected to the first end of the first inductor 1091, and a second end of the first capacitor 1092 is connected to the negative electrode of the first battery pack 102.

Certainly, other structures of the filtering unit 109 may also be used. Details are not described in the embodiments of the present disclosure.

In the embodiments of the present disclosure, the first inductor 1091 is a filter inductor, and a value of the first inductor 1091 may be set in a range of 2 µH to 1500 µH. The first inductor 1091 is specifically configured to filter high-frequency components in a power supply current to improve power supply quality.

The first capacitor 1092 is a filter capacitor, and a value of the first capacitor 1092 may be set in a range of 2 µF to 1500 µF. The first capacitor 1092 is specifically configured to filter an output voltage of the first battery pack 102, to stabilize the output voltage of the first battery pack 102, and suppress the current ripple of the first battery pack 102, thereby preventing the output current of the first battery pack 102 from fluctuating near 0. In this way, fast charging and discharging of the first battery pack 102 at a high frequency is avoided, thereby avoiding a problem of a shortened service life of the first battery pack 102, and achieving an objective of prolonging the service life of the battery pack.

It should be noted that, in a case that the first battery pack 102 has a filtering function, the first inductor 1091 and the first capacitor 1092 may be set to relatively small values. For example, the first inductor 1091 is set to 2 µH, and the first capacitor 1092 is set to 2 µF.

Correspondingly, in a case that the first battery pack 102 does not have a filtering function, the first inductor 1091 and the first capacitor 1092 may be set to relatively large values. For example, the first inductor 1091 is set to 1500 µH, and the first capacitor 1092 is set to 1500 µF.

In the embodiments of the present disclosure, a filtering unit 109 with a simple structure is provided, which can reduce hardware costs, design difficulty, and an occupied board area of the battery circuit 100.

In an embodiment of the present disclosure, as shown in FIG. 3, the battery circuit 100 provided in the embodiments of the present disclosure further includes a first freewheeling unit 110 and a second freewheeling unit 111, where
an input end of the first freewheeling unit 110 is connected to the second end of the first switch 105, and an output end of the first freewheeling unit 110 is connected to the first end of the first switch 105; and
an input end of the second freewheeling unit 111 is connected to the second end of the second switch 106, and an output end of the second freewheeling unit 111 is connected to the first end of the second switch 106.

In the embodiments of the present disclosure, at an initial moment when the second switch 106 is controlled to be closed and the first switch 105 is controlled to be opened, due to an impact of a freewheeling time and an action time of the first switch 105, it is generally impossible to control the first switch 105 to be immediately opened. This leads to short-circuit between the first switch 105 and the second switch 106 for a short time, further leading to burnout of the first battery pack 102 and the second battery pack 103 due to the short-circuit.

In the embodiments of the present disclosure, the second freewheeling unit 111 is arranged to be connected in parallel at both ends of the second switch 106, and freewheeling is performed by the second freewheeling unit 111. In this way, a time during which the second switch 106 is controlled to be closed when the first switch 105 is controlled to be opened may be delayed, thereby avoiding the problem that the first battery pack 102 and the second battery pack 103 are short-circuited and burned out.

Similarly, in the embodiments of the present disclosure, the first freewheeling unit 110 is arranged to be connected in parallel at both ends of the first switch 105, and freewheeling is performed by the first freewheeling unit 110. In this way, a time during which the first switch 105 is controlled to be closed when the second switch 106 is controlled to be opened may be delayed, thereby avoiding the problem that the first battery pack 102 and the second battery pack 103 are short-circuited and burned out.

In an embodiment of the present disclosure, as shown in FIG. 4, the first freewheeling unit 110 is a first diode 1101, and the second freewheeling unit 111 is a second diode 1111, where
an anode of the first diode 1101 is connected to the second end of the first switch 105, and a cathode of the first diode 1101 is connected to the first end of the first switch 105; and
an anode of the second diode 1111 is connected to the second end of the second switch 106, and a cathode of the second diode 1111 is connected to the first end of the second switch 106.

In the embodiments of the present disclosure, a first freewheeling unit 110 and a second freewheeling unit 111 with simple structures are provided, which can reduce hardware costs, design difficulty, and an occupied board area of the battery circuit 100.

In an embodiment of the present disclosure, as shown in FIG. 3, the battery circuit 100 provided in the embodiments of the present disclosure further includes a voltage stabilizing unit 112, where
the voltage stabilizing unit 112 is connected between the power source end 101 and the ground end 107.

In the embodiments of the present disclosure, on one hand, the voltage stabilizing unit 112 is configured to filter a bus, that is, a voltage fluctuation on a line on which the power source end 101 of the battery circuit 100 is located, which can stabilize a voltage provided to the load. On the other hand, the voltage stabilizing unit is configured to reduce a negative impact caused by a voltage fluctuation jointly generated by the first battery pack 102 and the voltage transformation unit 104 on the second battery pack 103.

In an embodiment of the present disclosure, as shown in FIG. 4, the voltage stabilizing unit 112 may be, for example, a second capacitor 1121. Certainly, the voltage stabilizing unit 112 may alternatively be implemented in another manner.

In an embodiment of the present disclosure, the second capacitor 1121 is a support capacitor, and a value of the second capacitor 1121 may be set in a range of 2 µF to 1500 µF.

In the embodiments of the present disclosure, a voltage stabilizing unit 112 with a simple structure is provided, which can reduce hardware costs, design difficulty, and an occupied board area of the battery circuit 100.

As shown in FIG. 5, the voltage transformation unit 104 in the battery circuit 100 provided in the embodiments of the present disclosure is a second inductor 1041, and the first switch 105 and the second switch 106 form a first bridge arm. Based on this, the battery circuit 100 provided in the embodiments of the present disclosure further includes a second bridge arm and a third inductor 115, and the first bridge arm and the second bridge arm form a full-bridge circuit, where
the second bridge arm is connected to the first bridge arm in parallel and is bridged between the positive electrode of the first battery pack 102 and the negative electrode of the second battery pack 103;
one end of the third inductor 115 is connected to a midpoint of the second bridge arm, and the other end of the third inductor 115 is connected to the negative electrode of the first battery pack 102 and the positive electrode of the second battery pack 103 respectively; and
the control unit 108 is connected to the second bridge arm, and the control unit 108 is further configured to control the full-bridge circuit, to cause the first battery pack 102 and/or the second battery pack 103 to supply power.

According to an embodiment of the present disclosure, the control unit 108 is specifically configured to: control the full-bridge circuit to be in a non-working state, to cause the first battery pack 102 and the second battery pack 103 to be connected in series to supply power; or control the full-bridge circuit to be in a working state, to cause the first battery pack 102 and/or the second battery pack 103 to supply power.

Specifically, as shown in FIG. 5, when the control unit 108 controls the full-bridge circuit to be in the non-working state, the first battery pack 102 and the second battery pack 103 are connected in series to discharge, to supply power to the load. When the control unit 108 controls the full-bridge circuit to be in the working state, the first bridge arm and the second bridge arm of the full-bridge circuit are in the working state alternately. When the first bridge arm is in the working state, an upper bridge arm and a lower bridge arm of the first bridge arm are alternately turned on. When the control unit 108 controls the upper bridge arm of the first bridge arm to be turned off and the lower bridge arm to be turned on within a first preset time, the second battery pack 103 charges the second inductor 1041. When the control unit controls the upper bridge arm of the first bridge arm to be turned on and the lower bridge arm to be turned off within a second preset time, the second inductor 1041 discharges stored electrical energy to supply power to the load, so that the second inductor 1041 implements a boosting function. In this case, electrical energy provided by the first battery pack 102 to the load is reduced and the output current becomes smaller. Similarly, when the second bridge arm is in the working state, when the control unit 108 controls an upper bridge arm of the second bridge arm to be turned off and a lower bridge arm to be turned on, the second battery pack 103 charges the third inductor 115. When the control unit controls the upper bridge arm of the second bridge arm to be turned on and the lower bridge arm to be turned off, the third inductor 115 discharges stored electrical energy to supply power to the load, so that the third inductor 115 implements a boosting function. During a process in which the second battery pack 103 charges the second inductor 1041 or the third inductor 115, the battery circuit 100 supplies power to the load only through the first battery pack 102. This process is repeated. When a voltage at an output end (the end connected to the first bridge arm) of the second inductor 1041 or an output end (the end connected to the second bridge arm) of the third inductor 115 increases to be equal to a bus voltage, the first battery pack 102 is open-circuited, and the output current of the first battery pack 102 becomes zero. In this case, the battery circuit 100 supplies power to the load only through the second battery pack 103, and the output power of the second battery pack 103 during discharging is higher than the power that can be outputted by the second battery pack 103. In this way, power can be stably supplied to the load, and the second battery pack 103 is caused to be in a continuous discharging state, so that the current ripple can be reduced.

When one bridge arm in the full-bridge circuit malfunctions, for example, when the first bridge arm malfunctions, energy may be stored through the third inductor and the second bridge arm, and the second battery pack 103 is boosted to supply power to the load, thereby improving the reliability of the battery circuit 100.

Therefore, the battery circuit in the embodiments of the present disclosure performs, through the control unit 108, phase dislocation control on the double bridge arms of the full-bridge circuit, so that the control difficulty can be reduced, and the second battery pack 103 can continuously and stably supply power, thereby improving the reliability of power supplying, reducing the current ripple, and avoiding a shortened service life of a battery caused by frequent charging of the battery.

According to an embodiment of the present disclosure, as shown in FIG. 6, the battery circuit 100 further includes: a current sampling unit 116, where the current sampling unit 116 is configured to obtain a current of the first battery pack 102 and/or a current of the second battery pack 103, a current of the second inductor 1041, and a current of the third inductor 115; and the control unit 108 controls the full-bridge circuit based on the obtained currents, to cause the first battery pack 102 and/or the second battery pack 103 to supply power. The current sampling unit 116 may be formed by a current sensor disposed in a circuit. The current sensor may collect various branches, such as the current of the first battery pack 102, the current of the second battery pack 103, the current of the second inductor 1041, and the current of the third inductor 115.

According to an embodiment of the present disclosure, when the first battery pack 102 is caused to discharge, the current sampling unit 116 obtains the current of the second battery pack 103; and when the second battery pack 103 is caused to discharge, the current sampling unit 116 obtains the current of the first battery pack 102.

That is, when the first battery pack 102 is caused to discharge, the current sampling unit 116 collects the current of the second battery pack 103; and when the second battery pack 103 is caused to discharge, the current sampling unit 116 collects the current of the first battery pack 102. After obtaining the current of the first battery pack 102 and/or the current of the second battery pack 103, the current of the second inductor 1041, and the current of the third inductor 115, the current sampling unit 116 transmits these current values to the control unit 108. The control unit 108 generates a control signal according to the current of the first battery pack 102 and/or the current of the second battery pack 103, the current of the second inductor 1041, and the current of the third inductor 115. The control unit 108 controls, according to the control signal, the first bridge arm and the second bridge arm of the full-bridge circuit to be in an alternating working state, so that the second inductor 1041 and the third inductor 115 are alternately charged and discharged, to achieve continuous boost of the second battery pack 103.

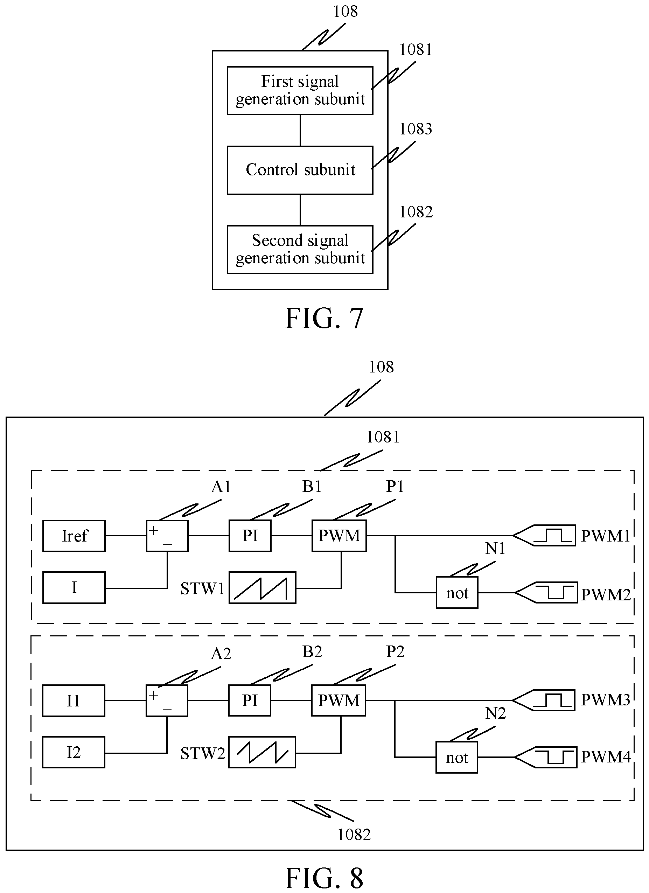

According to an embodiment of the present disclosure, as shown in FIG. 7, the control unit 108 includes: a first signal generation subunit 1081, a second signal generation subunit 1082, and a control subunit 1083. The first signal generation subunit 1081 is configured to generate a first control signal and a second control signal complementary to the first control signal according to a first current difference between a preset reference current and the current of the first battery pack 102 or the current of the second battery pack 103; the second signal generation subunit 1082 is configured to generate a third control signal and a fourth control signal complementary to the third control signal according to a second current difference between the current of the second inductor 1041 and the current of the third inductor 115; and the control subunit 1083 is configured to control the full-bridge circuit based on the first control signal, the second control signal, the third control signal, and the fourth control signal.

According to an embodiment of the present disclosure, as shown in FIG. 8, the first signal generation subunit 1081 includes: a first subtractor A1, a first regulator B1, a first signal generator P1, and a first inverter N1, where the first subtractor A1 is configured to obtain the first current difference between the preset reference current and the current of the first battery pack 102 or the current of the second battery pack 103; the first regulator B1 is configured to perform proportional integral (PI) regulation on the first current difference to obtain a first given value; the first signal generator P1 is configured to generate the first control signal according to the first given value and a first preset signal; and the first inverter N1 is configured to invert the first control signal to obtain the second control signal; and the second signal generation subunit 1082 includes: a second subtractor A2, a second regulator B2, a second signal generator P2, and a second inverter N2, where the second subtractor A2 is configured to obtain the second current difference between the current of the second inductor 1041 and the current of the third inductor 115; the second regulator B2 is configured to perform proportional integral (PI) regulation on the second current difference to obtain a second given value; the second signal generator P2 is configured to generate the third control signal according to the second given value and a second preset signal; and the second inverter N2 is configured to invert the third control signal to obtain the fourth control signal, where the first preset signal and the second preset signal are out of phase by a half period. The first preset signal and the second preset signal may each be a sawtooth wave signal, and a minimum value of the sawtooth wave signal is 0 and a maximum value of the sawtooth wave signal is 1.

Specifically, as shown in FIG. 8, the current sampling unit 116 collects the current of the first battery pack 102 and/or the current of the second battery pack 103, the current of the second inductor 1041, and the current of the third inductor 115 in real time respectively, to obtain a current of the first battery pack 102 or a current I of the second battery pack 103, a current I1 of the second inductor 1041, and a current I2 of the third inductor 115. A preset reference current Iref and the current I of the first battery pack 102 or the current I of the second battery pack 103 are inputted into the first subtractor A1 to calculate a difference, to obtain a first current difference ΔI1, and the first current difference ΔI1 is used as an input of the first regulator B1 to perform PI regulation on the first current difference ΔI1, to obtain a first given value, where the first given value is a value fluctuating between 0 and 1. The first given value and a value of a first preset signal STW1 are inputted into the first signal generator P1 for comparison. If the first given value is greater than the value of the first preset signal STW1, the first signal generator P1 outputs 1, otherwise, the first signal generator outputs 0, to obtain a first control signal PWM1 with a square wave waveform. A second control signal PWM2 may be obtained by inverting the first control signal PWM1 through the first inverter N1.

The current I1 of the second inductor and the current I2 of the third inductor are inputted into the second subtractor A2 to calculate a difference, to obtain a second difference ΔI2, and the second difference ΔI2 is used as an input of the second regulator B2 to perform PI regulation on the second difference, to obtain a second given value, where the second given value is a value fluctuating between 0 to 1. The second given value and a value of a second preset signal STW2 are inputted into the second signal generator P2 for comparison. If the second given value is greater than the value of the second preset signal STW2, the second signal generator P2 outputs 1, otherwise, the second signal generator outputs 0, to obtain a third control signal PWM3 with a square wave waveform. A fourth control signal PWM4 may be obtained by inverting the third control signal PWM3 through the second inverter N2. Since the first preset signal STW1 and the second preset signal STW2 are out of phase by a half period, the first control signal PWM1 and the second control signal PWM2 are out of phase by a half period with the third control signal PWM3 and the fourth control signal PWM4, thereby implementing alternating control of the first bridge arm and the second bridge arm of the full-bridge circuit.

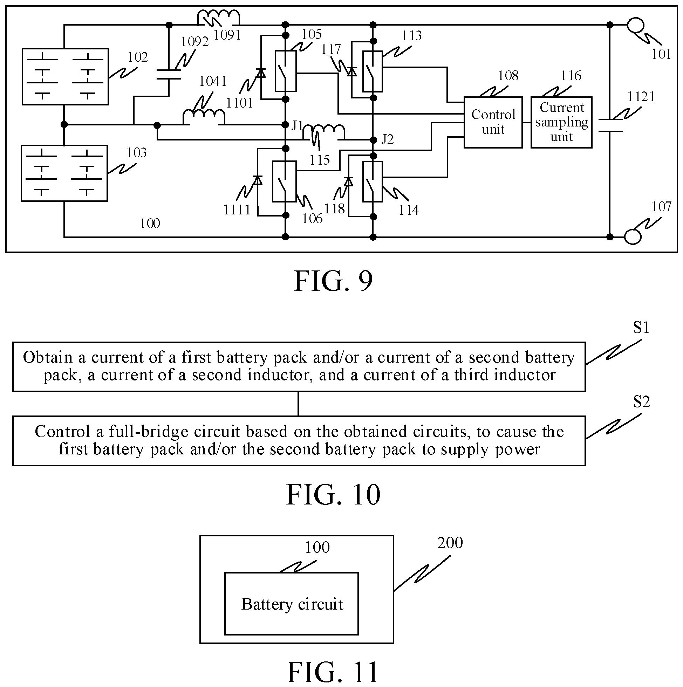

According to an embodiment of the present disclosure, as shown in FIG. 9, the first bridge arm includes a first switch and a second switch, where a first end of the first switch is connected to the positive electrode of the first battery pack 102, a second end of the first switch is connected to a first end of the second switch to form a first connection point 11, a second end of the second switch is connected to the negative electrode of the second battery pack 103, and the first connection point J1 is connected to one end of the second inductor 1041; and the second bridge arm includes a third switch and a fourth switch, where a first end of the third switch is connected to the positive electrode of the first battery pack 102, a second end of the third switch is connected to a first end of the fourth switch to form a second connection point J2, a second end of the fourth switch is connected to the negative electrode of the second battery pack 103, and the second connection point J2 is connected to one end of the third inductor 115.

According to an embodiment of the present disclosure, the control subunit 1083 is configured to: control the first switch of the first bridge arm according to the first control signal, and control the second switch of the first bridge arm according to the second control signal; and control the third switch of the second bridge arm according to the third control signal, and control the fourth switch of the second bridge arm according to the fourth control signal.

Specifically, as shown in FIG. 9, the current sampling unit 116 may collect the current of the first battery pack 102 and/or the current of the second battery pack 103, the current of the second inductor 1041, and the current of the third inductor 115, and the control unit 108 generates PWM control signals corresponding to the first switch, the second switch, the third switch, and the fourth switch respectively according to the current of the first battery pack 102 or the current of the second battery pack 103, the current of the second inductor 1041, and the current of the third inductor 115. The control unit 108 outputs a control signal corresponding to each switch to the control end of the switch, to control the switch to be closed or opened. It should be understood that, if two switches on the same bridge arm are closed at the same time, the bridge arm is in a straight-through state, the battery circuit 100 is in a short-circuit state, and the first battery pack 102 and the second battery pack 103 are damaged. Therefore, the first switch and the second switch cannot be closed at the same time, and the third switch and the fourth switch cannot be closed at the same time. Therefore, it may be set that the first control signal corresponding to the first switch is opposite to the second control signal corresponding to the second switch, the third control signal corresponding to the third switch is opposite to the fourth control signal corresponding to the fourth switch, and the first control signal corresponding to the first switch and the third control signal corresponding to the third switch are out of phase by a half period.

When the control unit 108 controls the full-bridge circuit to be in the working state, the first bridge arm and the second bridge arm of the full-bridge circuit are in the working state alternately. The control subunit 1083 controls, according to the first control signal, the first switch to be closed, and controls, according to the second control signal, the second switch to be opened, so that electrical energy stored by the second inductor 1041 is discharged to boost the second battery pack 103 to supply power to the load. After a half period, the control subunit 1083 controls, according to the first control signal, the first switch 105 to be opened, and controls, according to the second control signal, the second switch to be closed. In this case, the second battery pack 103, the second inductor 1041, and the second switch form a loop, to charge the second inductor 1041. In addition, the control subunit controls, according to the third control signal, the third switch to be closed, and controls, according to the fourth control signal, the fourth switch to be opened, so that electrical energy stored by the third inductor 115 is discharged to boost the second battery pack 103 to supply power to the load. After another half period, the control subunit controls, according to the third control signal, the third switch to be opened, and controls, according to the fourth control signal, the fourth switch to be closed. In this case, the second battery pack 103, the third inductor 115, and the fourth switch form a loop to charge the third inductor. In addition, the control subunit controls, according to the first control signal, the first switch to be closed, and controls, according to the second control signal, the second switch to be opened, to cause the second inductor 1041 to supply power to the load. The process cycles in this way.

According to an embodiment, the control subunit 1083 is configured to: in a case that the first bridge arm malfunctions, control the third switch of the second bridge arm according to the first control signal, and control the fourth switch of the second bridge arm according to the second control signal.

Specifically, when the first bridge arm malfunctions, the second inductor 1041 cannot supply power to the load. In this case, the current I1 of the second inductor 1041 is zero, so that an accurate and appropriate third control signal and an accurate and appropriate fourth control signal cannot be obtained. The control subunit 1083 may control the third switch of the second bridge arm according to the first control signal, and control the fourth switch of the second bridge arm according to the second control signal. A specific process is as follows: the control subunit 1083 controls, according to the first control signal PWM1, the third switch to be closed, and controls, according to the second control signal PWM2, the fourth switch to be opened, so that the electrical energy stored by the third inductor 115 is discharged to boost the second battery pack 103 to supply power to the load. After a half period, the control subunit 1083 controls, according to the first control signal PWM1, the third switch to be opened, and controls, according to the second control signal PWM2, the fourth switch to be closed. In this case, the second battery pack 103, the third inductor 115, and the fourth switch form a loop, to charge the third inductor 115. After another half period, the control subunit 1083 controls, according to the first control signal PWM1, the third switch to be closed, and controls, according to the second control signal PWM2, the fourth switch to be opened, so that the electrical energy stored by the third inductor 115 is discharged to boost the second battery pack 103 to supply power to the load. The process cycles in this way.

According to an embodiment of the present disclosure, as shown in FIG. 9, the first switch 105 is anti-parallel connected to the first freewheeling unit 110, the second switch 106 is anti-parallel connected to the second freewheeling unit 111, the third switch 113 is anti-parallel connected to the third freewheeling unit, and the fourth switch 114 is anti-parallel connected to the fourth freewheeling unit. FIG. 9 is shown by using an example in which the third freewheeling unit is a third diode 117 and the fourth freewheeling unit is a fourth diode 118.

Specifically, in a process in which the battery circuit 100 normally supplies power to a load, the first switch and the second switch are closed and opened in sequence, and the third switch and the fourth switch are closed and opened in sequence. If two switches on the same bridge arm are closed at the same time, the bridge arm is in a straight-through state, and the battery circuit 100 will be in a short-circuit state. Therefore, this state should be avoided. However, the switches on the bridge arm are not ideal devices, and closing and opening times of the switches are not strictly consistent. To avoid straight-through of the bridge arm, a "dead time" is usually set. One switch in the bridge arm is first controlled to be opened, and then the other switch is closed after the dead time ends, thereby avoiding a phenomenon of straight-through of the bridge arm. During the dead time, the switches on the same bridge arm are all in an opened state, the electrical energy stored in the inductor may cause high-voltage impact to the switches, causing damage to the switches. Freewheeling is performed during the dead time by using anti-parallel diodes of the switches in the bridge arm, thereby avoiding damage to the switches.

For example, as shown in FIG. 9, when the control unit 108 controls the first switch 105 to be changed from an opened state to a closed state, the second switch 106 is first controlled to be changed from the closed state to the opened state. During the dead time, both the first switch 105 and the second switch 106 are in the opened state. The electrical energy stored by the second inductor 1041 is freewheeled by the anti-parallel first freewheeling unit 110 of the first switch 105 to supply power to the load. After the dead time ends, the first switch 105 is changed from the opened state to the closed state, and the second inductor 1041 then supplies power to the load through the first switch 105. In a process that the third switch 113 is controlled to change from the opened state to the closed state, the electrical energy stored by the third inductor 115 is freewheeled through the anti-parallel third freewheeling unit of the third switch 113. Based on the same principle, when both the first battery pack 102 and the second battery pack 103 are charged, freewheeling is performed by the anti-parallel second freewheeling unit 110 of the second switch 106 and the anti-parallel fourth freewheeling unit of the fourth switch 114, so that impact of a high voltage to the second switch 106 and the fourth switch 114 can be avoided. A specific principle is the same as that of supplying power to the load, and details are not described herein again.

It should be noted that, in the embodiments of the present disclosure, the switch may be an element having a turn-on and turn-off function, such as a power switch tube, a metal oxide semiconductor field effect transistor (MOSFET), an insulated gate bipolar transistor (IGBT), or silicon carbide (SiC).

Based on the above, according to the battery circuit in the embodiments of the present disclosure, the first battery pack and the second battery pack are connected in series to supply power to the load. Through the control unit, phase dislocation control is performed on the dual bridge arms of the full-bridge circuit, which can reduce the control difficulty. In this way, the first inductor and the second inductor can store energy separately, to boost the second battery pack, so that the second battery pack stably supplies power to the load. In this way, the circuit controls the full-bridge circuit through the control unit, so that the second battery pack can continuously and stably supply power, thereby improving the power supplying reliability, reducing a current ripple, and avoiding a shortened service life of a battery caused by frequent charging of the battery.

Corresponding to the embodiments shown in FIG. 5 to FIG. 9, the present disclosure further provides a control method for a battery circuit.

As shown in FIG. 10, the control method for a battery circuit provided in the embodiments of the present disclosure is applied to the foregoing battery circuit, and the method includes the following steps:
S1. A current of the first battery pack 102 and/or a current of the second battery pack 103, a current of the second inductor 1041, and a current of the third inductor 115 are obtained.
S2. The full-bridge circuit is controlled based on the obtained currents, to cause the first battery pack 102 and/or the second battery pack 103 to supply power.

According to an embodiment of the present disclosure, that the full-bridge circuit is controlled based on the obtained currents, to cause the first battery pack 102 and/or the second battery pack 103 to supply power includes: a first current difference between a preset reference current and the current of the first battery pack 102 or the current of the second battery pack 103 is obtained, and a first control signal and a second control signal complementary to the first control signal are generated according to the first current difference; a second current difference between the current of the second inductor 1041 and the current of the third inductor 115 is obtained, and a third control signal and a fourth control signal complementary to the third control signal are generated according to the second current difference; and the full-bridge circuit is controlled according to the first control signal, the second control signal, the third control signal, and the fourth control signal. The preset reference current may be calibrated according to specific parameters of the first battery pack 102 and the second battery pack 103.

According to an embodiment of the present disclosure, that a first control signal and a second control signal complementary to the first control signal are generated according to the first current difference includes: proportional integral regulation is performed on the first current difference to obtain a first given value, the first control signal is generated according to the first given value and a first preset signal, and the first control signal is inverted to obtain the second control signal; and proportional integral regulation is performed on the second current difference to obtain a second given value, the third control signal is generated according to the second given value and a second preset signal, and the third control signal is inverted to obtain the fourth control signal, where the first preset signal and the second preset signal are out of phase by a half period. The first preset signal and the second preset signal may each be a sawtooth wave signal, and a minimum value of the sawtooth wave signal is 0 and a maximum value of the sawtooth wave signal is 1.

According to an embodiment of the present disclosure, that the full-bridge circuit is controlled according to the first control signal, the second control signal, the third control signal, and the fourth control signal includes: the first switch 105 of the first bridge arm is controlled according to the first control signal, and the second switch 106 of the first bridge arm is controlled according to the second control signal; in a case that the first bridge arm works normally, the third switch of the second bridge arm is controlled according to the third control signal, and the fourth switch of the second bridge arm is controlled according to the fourth control signal; and in a case that the first bridge arm malfunctions, the third switch of the second bridge arm is controlled according to the first control signal, and the fourth switch of the second bridge arm is controlled according to the second control signal.

It should be noted that, for details not disclosed in the control method for a battery circuit in the embodiments of the present disclosure, reference may be made to the details disclosed in the battery circuit in the embodiments of the present disclosure, which are not described herein again.

Based on the above, according to the control method for a battery circuit in the embodiments of the present disclosure, the current of the first battery pack and/or the current of the second battery pack, the current of the second inductor, and the current of the third inductor are obtained, and the control signal is generated based on the obtained currents to perform phase dislocation control on the full-bridge circuit. In this way, the method can perform phase dislocation control on the double bridge arms of the full-bridge circuit, so that the control difficulty can be reduced, and the second battery pack can continuously and stably supply power, thereby improving the reliability of power supplying, reducing the current ripple, and avoiding a shortened service life of a battery caused by frequent charging of the battery.

Corresponding to the foregoing embodiments, the present disclosure further provides a computer-readable storage medium.

The computer-readable storage medium in the embodiments of the present disclosure has a power supply control program stored therein. When the power supply control program is executed by a processor, the foregoing control method for a battery circuit is implemented.

According to the computer-readable storage medium in the embodiments of the present disclosure, by performing the foregoing control method for a battery circuit, phase dislocation control can be performed on the double bridge arms of the full-bridge circuit, so that the control difficulty can be reduced, and the second battery pack can continuously and stably supply power, thereby improving the reliability of power supplying, reducing the current ripple, and avoiding a shortened service life of a battery caused by frequent charging of the battery.

An embodiment of the present disclosure further provides a vehicle 200. As shown in FIG. 11, the vehicle 200 includes the battery circuit 100 according to any one of the foregoing embodiments.

In the embodiments of the present disclosure, the vehicle is an electric vehicle or a hybrid vehicle.

It should be noted that, the logic and/or steps shown in the flowcharts or described in any other manner herein, for example, a sequenced list that may be considered as executable instructions used for implementing logical functions, may be specifically implemented in any computer-readable medium for use by an instruction execution system, apparatus, or device (for example, a computer-based system, a system including a processor, or another system that can obtain an instruction from the instruction execution system, apparatus, or device and execute the instruction) or in combination with the instruction execution system, apparatus, or device. In the context of this specification, a "computer-readable medium" may be any apparatus that can include, store, communicate, propagate, or transmit a program for use by the instruction execution system, apparatus, or device or in combination with the instruction execution system, apparatus, or device. More specific examples (a non-exhaustive list) of the computer-readable medium include the following: an electrical connection portion (electronic apparatus) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium may even be a piece of paper for printing the program, or another proper medium, because, for example, optical scanning may be performed on the paper or the another medium, and then processing is performed by performing editing and decryption, or in another proper manner when necessary to obtain the program in an electronic manner. Then the program is stored in a computer memory.

It should be understood that, parts of the present disclosure can be implemented by hardware, software, firmware, or a combination thereof. In the foregoing implementations, a plurality of steps or methods may be implemented by using software or firmware that are stored in a memory and are executed by a proper instruction execution system. For example, if the parts of the preset disclosure are implemented by hardware, like that in another implementation, the parts may be implemented by any one of following common technologies in the art or a combination thereof: a discrete logic circuit of a logic gate circuit for realizing a logic function on a data signal, an application-specific integrated circuit having a proper combined logic gate circuit, a programmable gate array (PGA), a field programmable gate array (FPGA), and the like.

In the description of this specification, description of reference terms "an embodiment", "some embodiments", "an example", "a specific example", or "some examples" means that specific features, structures, materials, or characteristics described with reference to embodiments or examples are included in at least one embodiment or example of the present disclosure. In this specification, schematic description of the foregoing terms does not necessarily refer to the same embodiment or example. Moreover, the specific features, structures, materials, or characteristics described may be combined in any one or more embodiments or examples in a proper manner.

In addition, the terms "first" and "second" are used only for description purposes, but cannot be understood as indicating or implying relative importance or implicitly specifying a quantity of indicated technical features. Therefore, a feature defined by "first" or "second" may explicitly indicate or implicitly include at least one of such features. In the description of the present disclosure, unless otherwise specifically limited, "a plurality of" means at least two, for example, two or three.

In the present disclosure, unless otherwise clearly specified and limited, the terms "mount", "connect", "connection", and "fix" should be understood in a broad sense. For example, the connection may be a fixed connection, a detachable connection, or an integral connection; or may be a mechanical connection or an electrical connection; or may be a direct connection or an indirect connection through an intermediate medium, or may be internal communication between two elements or an interaction relationship between two elements, unless otherwise clearly limited. A person of ordinary skill in the art may understand specific meanings of the foregoing terms in the present disclosure according to a specific situation.

The embodiments of the present disclosure have been described above. The foregoing description is exemplary, not exhaustive, and is not limited to the disclosed embodiments. Many modifications and variations will be apparent to a person of ordinary skill in the art without departing from the scope and spirit of the described embodiments. The terms used in this specification are selected to best explain principles of the embodiments, practical application, or technical improvement over technologies in the market, or enable a person of ordinary skill in the art to understand the embodiments disclosed in this specification. The scope of the present disclosure is defined by the appended claims.

## Claims

1. A battery circuit (100), comprising: a power source end (101), a first battery pack (102), a second battery pack (103) of a different type from the first battery pack (102), a voltage transformation unit (104), a first switch (105), a second switch (106), and a ground end (107), wherein
a positive electrode of the first battery pack (102) is connected to the power source end (101), and a negative electrode of the first battery pack (102) is connected to a positive electrode of the second battery pack (103);
a negative electrode of the second battery pack (103) is connected to the ground end (107);
a first end of the first switch (105) is connected to the power source end (101), and a second end of the first switch (105) is connected to a first end of the second switch (106);
a second end of the second switch (106) is connected to the ground end (107); and
the voltage transformation unit (104) is connected between the negative electrode of the first battery pack (102) and the second end of the first switch (105).

2. The battery circuit (100) according to claim 1, further comprising:
a control unit (108), a first end of the control unit (108) being connected to a control end of the first switch (105), and a second end of the control unit (108) being connected to a control end of the second switch (106),
wherein the control unit (108) is configured to: control, in a first preset condition, the first switch (105) and the second switch (106) to be opened or closed according to a first preset control rule, to increase output power of the second battery pack (103); and/or
control, in a second preset condition, the first switch (105) and the second switch (106) to be opened or closed according to a second preset control rule, to cause input power of the first battery pack (102) to be different from input power of the second battery pack (103); and/or
control, in a third preset condition, the first switch (105) and the second switch (106) to be opened or closed according to a third preset control rule, to cause the first battery pack (102) to charge the second battery pack (103) or cause the second battery pack (103) to charge the first battery pack (102); and/or
control, in a fourth preset condition, the first switch (105) and the second switch (106) to be opened, to cause the first battery pack (102) and the second battery pack (103) to be connected in series for discharging or charging.

3. The battery circuit (100) according to claim 1 or 2, wherein the first battery pack (102) is a power type battery pack, and the second battery pack (103) is an energy type battery pack; or
the first battery pack (102) is an energy type battery pack, and the second battery pack (103) is a power type battery pack.

4. The battery circuit (100) according to claim 3, wherein the first battery pack (102) is the power type battery pack, the second battery pack (103) is the energy type battery pack, and the battery circuit (100) further comprises: a filtering unit (109), wherein
a first end of the filtering unit (109) is connected to the positive electrode of the first battery pack (102), a second end of the filtering unit (109) is connected to the power source end (101), and a third end of the filtering unit (109) is connected to the negative electrode of the first battery pack (102).

5. The battery circuit (100) according to claim 4, wherein the filtering unit (109) comprises a first inductor (1091) and a first capacitor (1092), wherein
a first end of the first inductor (1091) is connected to the positive electrode of the first battery pack (102), and a second end of the first inductor (1091) is connected to the power source end (101); and
a first end of the first capacitor (1092) is connected to the first end of the first inductor (1091), and a second end of the first capacitor (1092) is connected to the negative electrode of the first battery pack (102).

6. The battery circuit (100) according to any one of claims 1 to 5, further comprising a first freewheeling unit (110) and a second freewheeling unit (111), wherein
an input end of the first freewheeling unit (110) is connected to the second end of the first switch (105), and an output end of the first freewheeling unit (110) is connected to the first end of the first switch (105); and
an input end of the second freewheeling unit (111) is connected to the second end of the second switch (106), and an output end of the second freewheeling unit (111) is connected to the first end of the second switch (106).

7. The battery circuit (100) according to claim 6, wherein the first freewheeling unit (110) is a first diode (1101), and the second freewheeling unit (111) is a second diode (1111), wherein
an anode of the first diode (1101) is connected to the second end of the first switch (105), and a cathode of the first diode (1101) is connected to the first end of the first switch (105); and
an anode of the second diode (1111) is connected to the second end of the second switch (106), and a cathode of the second diode (1111) is connected to the first end of the second switch (106).

8. The battery circuit (100) according to any one of claims 1 to 7, further comprising a voltage stabilizing unit (112), wherein
the voltage stabilizing unit (112) is connected between the power source end (101) and the ground end (107).

9. The battery circuit (100) according to claim 8, wherein the voltage stabilizing unit (112) is a second capacitor (1121).

10. The battery circuit (100) according to any one of claims 1 to 9, wherein the voltage transformation unit (104) is a second inductor (1041).

11. The battery circuit (100) according to claim 2, wherein the voltage transformation unit (104) is a second inductor (1041), the first switch (105) and the second switch (106) form a first bridge arm, the battery circuit (100) further comprises a second bridge arm and a third inductor (115), and the first bridge arm and the second bridge arm form a full-bridge circuit, wherein
the second bridge arm is connected to the first bridge arm in parallel and is bridged between the positive electrode of the first battery pack (102) and the negative electrode of the second battery pack (103);
one end of the third inductor (115) is connected to a midpoint of the second bridge arm, and the other end of the third inductor (115) is connected to the negative electrode of the first battery pack (102) and the positive electrode of the second battery pack (103) respectively; and
the control unit (108) is connected to the second bridge arm, and the control unit (108) is further configured to control the full-bridge circuit, to cause the first battery pack (102) and/or the second battery pack (103) to supply power.

12. The battery circuit (100) according to claim 11, wherein the control unit (108) is further configured to:
control the full-bridge circuit to be in a non-working state, to cause the first battery pack (102) and the second battery pack (103) to be connected in series to supply power; or
control the full-bridge circuit to be in a working state, to cause the first battery pack (102) and/or the second battery pack (103) to supply power.

13. The battery circuit (100) according to claim 12, further comprising:
a current sampling unit (116), configured to obtain a current of the first battery pack (102) and/or a current of the second battery pack (103), a current of the second inductor (1041), and a current of the third inductor (115); and
the control unit (108) controlling the full-bridge circuit based on the obtained currents, to cause the first battery pack (102) and/or the second battery pack (103) to supply power.

14. The battery circuit (100) according to claim 13, wherein the control unit (108) comprises:
a first signal generation subunit (1081), configured to generate a first control signal and a second control signal complementary to the first control signal according to a first current difference between a preset reference current and the current of the first battery pack (102) or the current of the second battery pack (103);
a second signal generation subunit (1082), configured to generate a third control signal and a fourth control signal complementary to the third control signal according to a second current difference between the current of the second inductor and the current of the third inductor; and
a control subunit (1083), configured to control the full-bridge circuit based on the first control signal, the second control signal, the third control signal, and the fourth control signal.

15. The battery circuit (100) according to claim 14, wherein the first signal generation subunit (1081) comprises: a first subtractor (A1), a first regulator (B1), a first signal generator (P1), and a first inverter (N1),
wherein the first subtractor (A1) is configured to obtain the first current difference between the preset reference current and the current of the first battery pack (102) or the current of the second battery pack (103);
the first regulator (B 1) is configured to perform proportional integral regulation on the first current difference to obtain a first given value;
the first signal generator (P1) is configured to generate the first control signal according to the first given value and a first preset signal; and
the first inverter (N1) is configured to invert the first control signal to obtain the second control signal; and
the second signal generation subunit (1082) comprises: a second subtractor (A2), a second regulator (B2), a second signal generator (P2), and a second inverter (N2),
wherein the second subtractor (A2) is configured to obtain the second current difference between the current of the second inductor and the current of the third inductor;
the second regulator (B2) is configured to perform proportional integral regulation on the second current difference to obtain a second given value;
the second signal generator (P2) is configured to generate the third control signal according to the second given value and a second preset signal; and
the second inverter (N2) is configured to invert the third control signal to obtain the fourth control signal,
wherein the first preset signal and the second preset signal are out of phase by a half period.

16. The battery circuit (100) according to any one of claims 13 to 15, wherein when the first battery pack (102) is caused to discharge, the current sampling unit (116) obtains the current of the second battery pack (103); and
when the second battery pack (103) is caused to discharge, the current sampling unit (116) obtains the current of the first battery pack (102).

17. The battery circuit (100) according to claim 14, wherein the second end of the first switch (105) and the first end of the second switch (106) form a first connection point (J1);
the second bridge arm comprises a third switch (113) and a fourth switch (114); and
a first end of the third switch (113) is connected to the positive electrode of the first battery pack (102), a second end of the third switch (113) is connected to a first end of the fourth switch (114) to form a second connection point (J2), a second end of the fourth switch (114) is connected to the negative electrode of the second battery pack (103), and the second connection point (J2) is connected to one end of the third inductor (115).

18. The battery circuit (100) according to claim 17, further comprising a third freewheeling unit (117) and a fourth freewheeling unit (118), wherein
an input end of the third freewheeling unit (117) is connected to the second end of the third switch (113), and an output end of the third freewheeling unit (117) is connected to the first end of the third switch (113); and
an input end of the fourth freewheeling unit (118) is connected to the second end of the fourth switch (114), and an output end of the fourth freewheeling unit (118) is connected to the first end of the fourth switch (114).

19. The battery circuit (100) according to claim 17 or 18, wherein the control subunit (1083) is further configured to:
control the first switch (105) of the first bridge arm according to the first control signal, and control the second switch (106) of the first bridge arm according to the second control signal; and
control the third switch (113) according to the third control signal, and control the fourth switch (114) according to the fourth control signal.

20. The battery circuit (100) according to claim 19, wherein the control subunit (1083) is further configured to:
in a case that the first bridge arm malfunctions, control the third switch (113) according to the first control signal, and control the fourth switch (114) according to the second control signal.

21. A control method for a battery circuit, applied to the battery circuit (100) according to any one of claims 1 to 20, the method comprising:
obtaining a current of the first battery pack (102) and/or a current of the second battery pack (103), a current of the second inductor (1041), and a current of the third inductor (115); and
controlling the full-bridge circuit based on the obtained currents, to cause the first battery pack (102) and/or the second battery pack (103) to supply power.

22. The method according to claim 21, wherein the controlling the full-bridge circuit based on the obtained currents, to cause the first battery pack (102) and/or the second battery pack (103) to supply power comprises:
obtaining a first current difference between a preset reference current and the current of the first battery pack (102) or the current of the second battery pack (103), and generating a first control signal and a second control signal complementary to the first control signal according to the first current difference;
obtaining a second current difference between the current of the second inductor (1041) and the current of the third inductor (115), and generating a third control signal and a fourth control signal complementary to the third control signal according to the second current difference; and
controlling the full-bridge circuit according to the first control signal, the second control signal, the third control signal, and the fourth control signal.

23. The method according to claim 22, wherein the generating a first control signal and a second control signal complementary to the first control signal according to the first current difference comprises:
performing proportional integral regulation on the first current difference to obtain a first given value, generating the first control signal according to the first given value and a first preset signal, and inverting the first control signal to obtain the second control signal; and
performing proportional integral regulation on the second current difference to obtain a second given value, generating the third control signal according to the second given value and a second preset signal, and inverting the third control signal to obtain the fourth control signal, wherein the first preset signal and the second preset signal are out of phase by a half period.

24. The method according to claim 22 or 23, wherein the controlling the full-bridge circuit according to the first control signal, the second control signal, the third control signal, and the fourth control signal comprises:
controlling the first switch (105) of the first bridge arm according to the first control signal, and controlling the second switch (106) of the first bridge arm according to the second control signal;
in a case that the first bridge arm works normally, controlling the third switch of the second bridge arm according to the third control signal, and controlling the fourth switch of the second bridge arm according to the fourth control signal; and
in a case that the first bridge arm malfunctions, controlling the third switch of the second bridge arm according to the first control signal, and controlling the fourth switch of the second bridge arm according to the second control signal.

25. A vehicle, comprising the battery circuit (100) according to any one of claims 1 to 20.
